# EUROPÄISCHE PATENTSCHRIFT

(11) **EP 0 467 340 B1**
(45) Veröffentlichungstag und Bekanntmachung des Hinweises auf die Patenterteilung: **07.10.1998**
(21) Anmeldenummer: 91111964.2
(22) Anmeldetag: 17.07.1991
(51) Int. Cl.: B60R 19/34, F16F 7/12

(54) **Pralldämpfer**
Shock absorber
Amortisseur de choc

(30) Priorität: 17.07.1990 DE 4022734; 05.09.1990 DE 4028164
(43) Veröffentlichungstag der Anmeldung: 22.01.1992
(73) Patentinhaber: Gesellschaft für Innenhochdruckverfahren mbH & Co.KG, D-73431 Aalen (DE)
(72) Erfinder: Ebbinghaus, Alfred, W-7080 Aalen (DE)
(74) Vertreter: Neidl-Stippler, Cornelia, Dr.

(56) Entgegenhaltungen:
- DE-A- 1 811 453
- DE-A- 2 825 460
- GB-A- 1 195 445

## Beschreibung

Die Erfindung betrifft einen Pralldämpfer entsprechend den im Oberbegriff von Anspruch 1 bzw. 2 aufgeführten Merkmalen.

Ein gattungsgemäßer Pralldämpfer ist aus der US-A 3 899 947 bekannt. Der Pralldämpfer weist rohrförmige, ineinander unter Deformation verschiebliche Teile mit im wesentlichen kreisrundem Querschnitt auf. Ein ähnlicher Pralldämpfer ist aus der DE-A 2 825 460 bekannt.

Weitere Pralldämpfer sind bspw. aus der DE-A 3 836 724 oder auch der DE-A 3 042 931 bekannt geworden. Diese bekannten Pralldämpfer sind insofern nachteilig, als sie kompliziert herzustellen und daher relativ teuer sind.

Aus der DE-A 1 811 453 sind Pralltöpfe mit Flanschen in Form von zwei Halbschalen bekannt.

Diese bekannten Pralldämpfer wirken gut bei reinen Frontalzusammenstößen, sind aber bei den in der Praxis weitaus häufiger auftretenden versetzten Frontalzusammenstößen nicht in zufriedenstellender Weise zur Aufnahme von Querkräften ausgestattet.

Es ist demzufolge Aufgabe der Erfindung, einen gegenüber bekannten Pralldämpfern auch bei unter einem Winkel auftreffenden Kräften wirksameren sowie einfach und billig herzustellenden Pralldämpfer vorzuschlagen.

Die Aufgabe wird erfindungsgemäß durch die im Anspruch 1 bzw. im Anspruch 2 vorgeschlagenen Merkmale gelöst.

Meist wird vom Pralldämpfer lediglich die Aufnahme von Kräften erwartet, die im wesentlichen in einer Ebene auftreffen, so daß in den meisten Fällen eine ovale Form ausreicht. Für besonders gelagerte Fälle können aber auch andere unrunde Formen ausgebildet werden.

Dabei kann es im Interesse der Material- und Gewichtsersparnis sein, wenn die beiden Hohlteile Längsrippen zur Verstärkung als Verstärkungsprofile angeformt haben, was die mechanische Festigkeit des Pralldämpfers bei gleichem Gewicht erheblich verbessern kann. Diese Ausführungsform läßt sich insbesondere durch das Innenhochdruckumformverfahren herstellen, wie es bspw. nachfolgend beschrieben ist.

Vorteilhafte Weiterbildungen der Erfindung ergeben sich aus den Unteransprüchen.

Es kann bevorzugt sein, daß mindestens eine Zwischenschicht zwischen äußerem Deformationsteil und innerem Deformationsteil vorgesehen ist, die elastisch oder inelastisch deformierbar ist.

Je nach erwünschter Charakteristik des Pralldämpfers kann die Vorrichtung so ausgebildet sein, daß bis zu einem vorherbestimmten Impuls in Längsrichtung eine elastische Deformation stattfindet, bei höheren Impulsen dagegen eine irreverssible Deformation.

Es kann aber auch bei bestimmten Ausführungsformen sinnvoll sein, inelastisch verformende Bereiche vorzusehen.

Zusätzlich mit dem Paßsitz der ineinander gemeinsam umgeformten hohlen Formteile kann vorgesehen sein, daß Innen- und Außenschicht durch Verbindungsmittel, wie Schweißpunkte, Nieten, Stifte oder Kleber miteinander verbunden sind. Durch derartige Befestigungsmittel kann die Ansprechcharakteristik des Dämpfers weiter variiert werden, wie dem Fachmann geläufig ist.

Bevorzugt weist das Deformationsteil einen Deformationskonus auf, dessen Winkel Alpha selbsthemmend für Verschiebungen des Außen- und Innenteils gegeneinander ist.

Allgemein ist festzustellen, daß als Ausgangsmaterialien zur Herstellung des Pralldämpfers teilweise ineinander angeordnete Rohre eingesetzt werden. Dabei wird hier unter "Rohr" ein Hohlkörper verstanden werden, der einen geringeren Innendurchmesser aufweisen, als er lang ist und dieser Begriff ist keineswegs nur auf Hohlkörper mit kreisförmigem Querschnitt eingeschränkt, sondern umfaßt auch Vierkantrohre, Sechskantrohre und andere Hohlkörper mit nicht kreisförmigem Querschnitt, deren Längenausdehnung größer ist als ihr Durchmesser.

Bevorzugt ist das Ausgangsrohr ein nahtloses Rohr. Unter nahtlosem Rohr werden hier Rohre verstanden, die keine Schweißnaht im eigentlichen Sinne aufweisen.

Bevorzugt werden die Ausgangsrohre für den erfindungsgemäßen Pralldämpfer - wobei hier auch die Zwischenschicht aus einem rohrförmigen Ausgangsteil hergestellt werden kann, aber auch bereits als Außenschicht auf dem Innenausgangsrohr oder als Innenschicht auf dem Außenausgangsrohr aufgebracht sein kann - aus mehreren ineinander angeordneten, nicht notwendi-gerweise paßgenau aufeinanderliegenden Metallrohren gebildet, wobei das Metall der Metallrohre gleich oder unterschiedlich sein kann und das Material für die Zwischenschicht auch nichtmetallisch sein kann, wobei nach Durchführung des Verfahrens, d.h. nach Beaufschlagung der verschiedenen Rohrschichten mit Innendruck - diese aneinander angelegt werden und so fest aufeinanderliegen und über Form- und Reibschluß im wesentlichen parallel zueinander, auch in ggf. ausgebildeten Rippen, verlaufen. Gleichzeitig mit dem Metall können auch andere Materialien, bspw. Kautschuk oder Kunststoffe, mit umgeformt werden, vorausgesetzt, sie eignen sich für Umformverfahren und unter Metallrohr sollen hier auch Rohre verstanden werden, die nur teilweise aus Metall bestehen und auch ein oder mehrere andere Materialien schichtartig aufweisen können. Geeignete Metalle sind bspw. unlegierte und legierte Stähle, warmfeste Stähle, Vergütungsstähle, unlegiert und legiert, warmfeste Stähle und nichtrostende Stähle; ferner eignen sich auch Aluminium, Aluminiumlegie-rungen; Titan und Titanlegierungen, Kupfer und dessen Legierungen sowie Nickel u. dgl., wobei es bevorzugt ist, daß der Werkstoff ein weitgehend konturgetreues Ausfüllen der Werkzeugform gewährleistet. Bei den Stahlwerkstoffen wird eine niedrige Fließspannung, ein hohes Formänderungsvermögen und eine geeignete Verfestigung nach dem Umformen in vielen Fällen gefordert.

Bei einem besonders bevorzugten Verfahren zur Herstellung eines erfindungsgemäßen Pralldämpfers kann das mehrwandige Deformationsteil durch ein Innenhochdruckumformverfahren, bei dem ein fluides Medium unter hohem Druck in ein im wesentlichen rohrförmiges mehrwandiges Ausgangsmaterial eingebracht wird und sodann das Ausgangsmaterial gegen eine Außenform umformt, hergestellt werden. Durch dieses Verfahren kann eine schnelle und problemlose Herstellung von aneinander angepaßten Deformationsteilen, die sich bereits in ihrer endgültigen Einsatzposition befinden, erreicht werden, wodurch aufwendige Schritte des Ineinanderbringens der Einzelteile und auch erhöhte Anforderungen an die Paßgenauigkeit von Innen- und Außenteilen vermieden werden können bzw. durch das Verfahren problemlos erfüllt werden.

Das Innenhochdruckumformverfahren ist beispielweise in Industrieanzeiger Nr. 20 vom 9.3.1984 beschrieben worden oder auch in Metallumformtechnik, Ausgabe 1D/91, S.15 ff.: A. Ebbinghaus: Präzisions-Werkstücke in Leichtbauweise, hergestellt durch Innenhochdruck-Umformen" oder auch Werkstatt und Betrieb 123 (1990), 3, S. 241 - 243: A. Ebbinghaus: "Wirtschaftliches Konstruieren mit Inenhochdruckumgeformten Präzisionswerkstücken" oder auch Werkstatt und Betrieb 122 (19910), 11 (1989), S. 933 - 938, auf deren Offenbarung hier zur Vermeidung von Wiederholungen in vollem Umfang bezug genommen wird.

Dabei ist es bevorzugt, ein Innenhochdruckumformverfahren einzusetzen, bei dem das fluide Material ein Material auf Wasserbasis unter einem Druck bis zu 10.000 bar ist.

Bevorzugt sind mindestens das Innen- und Außenteil aus Metall, bevorzugt Stahl.

Es kann vorgesehen sein, daß die elastische Zwischenschicht aus einem gummielastischen Material, wie einem Polymeren, Silikongummi oder Gummi, besteht.

Ein geeignetes Material für eine Zwischenschicht bei einer Ausführungsform mit inelastischer Zwischenschicht ist bsp. Weichmetall oder Kunststoff.

Bei der mehrteiligen, insbesondere einer mehr als zweiteiligen Ausgestaltung des Pralldämpfers können alle Schichten jeweils aus dem für sie günstigsten Material gefertigt werden, wobei das Außen- und Innenmaterial die Anforderungen an ein mechanisch widerstandsfähiges, teilelastisches Material erfüllen muß, während das Material für die Zwischenschicht zur Energieabsorption dienen kann und entweder elastisch oder inelastisch deformierbar sein - je nach erwünschtem Dämpfungsverhalten.

Nachfolgend soll eine bevorzugte Ausführungsform der Erfindung anhand der begleitenden Zeichnung näher erläutert werden.

Dabei zeigt:
- Fig.1: eine schematische Darstellung eines Pralldämpfers gemäß der Erfindung,
- Fig.2: einen Querschnitt entlang der Linie A-A des Pralldämpfers der Fig. 1
- Fig.3: einen weiteren Pralldämpfer mit angeformten Verstärkungsrippen, und
- Fig.4: einen Querschnitt durch den Pralldämpfer der Fig. 3 entlang der Linie B-B;
- Fig.5: einen Pralldämpfer mit eingeformten Querrippen, in perspektivischer Darstellung; und
- Fig.6: den Pralldämpfer der Fig. 5 im Längsschnitt.

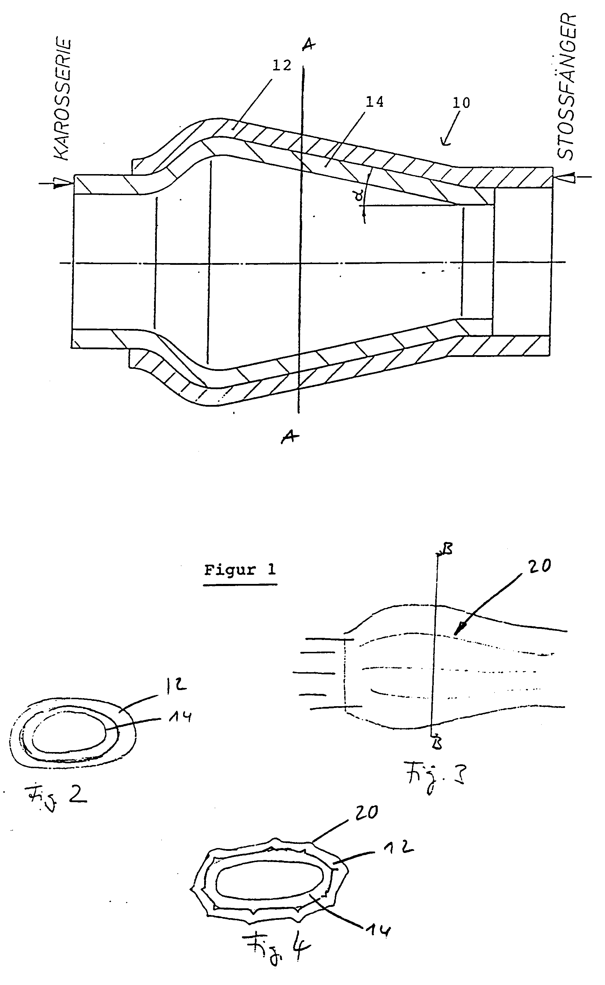

Wie in Fig. 1 gezeigt, weist ein erfindungsgemäßer Pralldämpfer 10 eine Hohlteilkombination aus zwei teilweise ineinandergesteckten Hohlteilen, einem inneren Deformationsteil 14 und einem äußeren Deformationsteil 12, auf. Beide Teile sind in ihrem gegenseitigen Überlappungsbereich gemeinsam konusartig in Wulstform nach außen unter einem selbsthemmenden Winkel Alpha geformt, der die beiden Teile daran hindert, sich bei Druck oder Zug unterhalb einer vorherbestimmten Kraft voneinander zu trennen. Bevorzugt sind beide Teile aus Stahl hergestellt und werden durch das an sich bekannte Innenhochdruckumformverfahren bevorzugt aus ineinandergesteckten Rohrausgangsteilen durch Druckbeaufschlagung durch ein fluides Medium vom Rohrinneren gegen eine Außenform gemeinsam, so daß beide Teile durch Form- und Kraftschluß aufeinander haften. Bei der hier dargestellten Ausführungsform wird das Innenteil an der Karosserie, bevorzugt einem Längsträger des Rahmens, angebracht, während das Außenteil mit dem Stoßfänger verbunden ist. Bei Auftreffen eines Stoßes, wie eines Frontalzusammenstoßes oder eines versetzten Aufpralls mit einer Kraftkomponente in Richtung der Fahrzeuglängsachse werden zunächst Innen- und Außendeformationsteil (12, 14) gegeneinander unter Deformation des Wulstbereiches nach Außen und Aufweitung des Winkels Alpha verschoben, bis die Deformationsfähigkeit des Pralldämpfers erschöpft ist und die Deformationskräfte an Rahmen und Stoßfinger weiter wirken. Dabei kann die Energieaufnahme des Pralldämpfers durch Auswahl eines geeigneten Profils im Überlappungsbereich entsprechend den Anforderungen ausgestaltet werden.

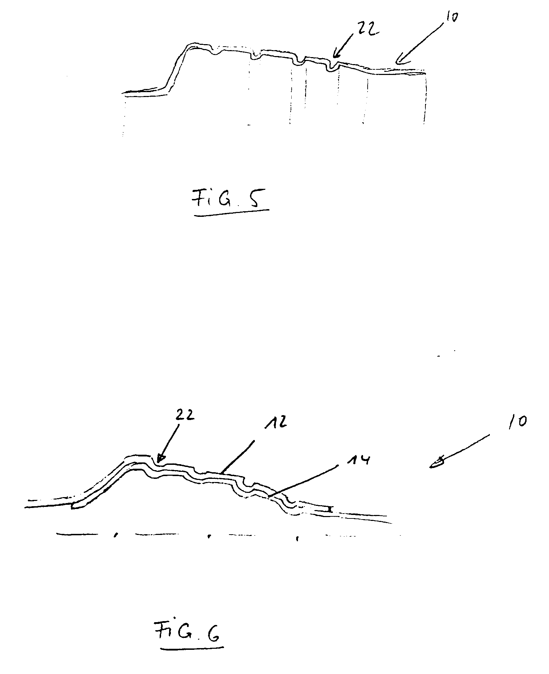

In Fig. 2 ist ein Querschnitt durch den Pralldämpfer der Fig. 1 entlang der Linie A-A gezeigt, aus dem sich der ovalförmige Querschnitt ergibt. In Fig. 3 ist eine weitere Ausführungsform eines erfindungsgemäßen Pralldämpfers 10 im Querschnitt dargestellt, die Längsrippen besitzt.

Zusätzlich zur Verbindung der Schichten durch den durch die Umformunmg erfolgten Form- und Reibschluß kann noch eine weitere Verbindung zwischen den Schichten durch Schweißpunkte, Klebstoffe, Nieten od. dgl. hergestellt werden, um die Verschiebbarkeit der Teile zueinander zu steuern.

In Fig. 3 ist nun eine perspektivische Darstellung eines Pralldämpfers 10 gezeigt, der in Längsrichtung durch eingeformte Rippen verstärkt ist. Diese Ausgestaltung ermöglicht es, dem Material eine erhöhte Steifigkeit und Stauchresistenz in Längsrichtung des Pralldämpfers zu verleihen und dadurch im Gegensatz zur Ausführungsform mit gleichmäßig dicken Wänden die Verwendung von weniger Material mit den Vorteilen entsprechender Materialersparnis und Gewichtsreduktion.

In Fig. 4 ist ein Querschnitt entlang der Linie B-B der Fig. 3 gezeigt, aus dem deutlich ersichtlich ist, daß durch die Ausbildung des erfindungsgemäßen Pralldämpfers durch das Innenhochdruckumformverfahren nun ein paralleler Wandverlauf im Innen- und Außenteil ergibt, sodaß die Rippen in beiden Teilen ausgebildet sind.

In Fig. 5 ist eine perspektivische Darstellung einer weiteren Ausführungsform des Pralldämpfers mit mehreren Querrippen gezeigt, die als Soll-Stauchstellen dienen und dadurch eine Deformation des Pralldämpfers an bevorzugten Stellen ermöglichen. Dadurch kann das Verhalten dieses Pralldämpfers bei einem Frontalaufprall gesteuert werden und weitere kinetische Energie durch Verformung des Pralldämpfers aufgenommen werden, ohne daß der Aufprall direkt in Richtung des Aufpralls weitergeleitet wird.

Aus Fig. 6 ist der in Fig. 5 dargestellte Pralldämpfer im Querschnitt ersichtlich, woraus sich ergibt, daß die den Pralldämpfer aufbauenden Innen- und Außenteile parallel zueinander verlaufen, sodaß bei Einwirkung einer Kraft in Richtung der Längsachse die Solldeformationsstelle im Bereich der Querrippen erfolgt.

## Patentansprüche

1. Pralldämpfer, insbesondere für Kraftfahrzeuge, der einerseits an einer Stoßstange und andererseits an einem Längsträger oder einem anderen Karosserieteil eines Fahrzeugrahmens befestigt ist,
- mit einem nicht regenerierbaren Deformationsglied zur Energieabsorption bei Krafteinwirkung mit einer Kraftkomponente in Richtung der Längsachse des Längsträgers,
- wobei das Deformationsglied mindestens zwei ineinandergreifende hohle Deformationsteile aufweist,
- von denen eines ein äußeres Deformationsteil und ein weiteres ein inneres Deformationsteil ist, und
- von denen jeweils eines am Stoßfänger und eines am Längsträger des Kraftfahrzeugs befestigt ist,
- wobei bei Stauchen des Pralldämpfers mit einer Kraftkomponente in dessen Longitudinalachse die Deformationsteile relativ gegeneinander unter Materialdeformation zusammengeschoben werden,
dadurch gekennzeichnet, daß
- mindestens eine Zwischenschicht (13) zwischen dem äußeren Deformationsteil (12) und dem inneren Deformationsteil (14) vorgesehen ist, die die Reibung zwischen dem äußeren Deformationsteil und dem inneren Deformationsteil beeinflußt,
- wobei die Zwischenschicht (13) bevorzugt elastisch ist und bevorzugt aus einem gummielastischen Material, wie einem Polymer, Silikongummi oder Gummi, besteht
- oder wobei die Zwischenschicht (13) bevorzugt inelastisch ist und aus einem Weichmetall oder Kunststoff besteht.

2. Pralldämpfer, insbesondere für Kraftfahrzeuge, der einerseits an einer Stoßstange und andererseits an einem Längsträger oder einem anderen Karosserieteil eines Fahrzeugrahmens befestigt ist,
- mit einem nicht regenerierbaren Deformationsglied zur Energieabsorption bei Krafteinwirkung mit einer Kraftkomponente in Richtung der Längsachse des Längsträgers,
- wobei das Deformationsglied mindestens zwei ineinandergreifende hohle Deformationsteile aufweist,
- von denen eines ein äußeres Deformationsteil und ein weiteres ein inneres Deformationsteil ist, und
- von denen jeweils eines am Stoßfänger und eines am Längsträger des Kraftfahrzeugs befestigt ist,
- wobei bei Stauchen des Pralldämpfers mit einer Kraftkomponente in dessen Longitudinalachse die Deformationsteile relativ gegeneinander unter Materialdeformation zusammengeschoben werden,
dadurch gekennzeichnet,
daß die hohlen Deformationsteile (12,14) angeformte Verstärkungslängsrippen (20) aufweisen.

3. Pralldämpfer nach einem der vorangehenden Ansprüche,
dadurch gekennzeichnet,
daß das äußere Deformationsteil (12) und/oder das innere Deformationsteil (14) eine Beschichtung, bevorzugt eine galvanisch aufgebrachte Beschichtung aufweist, die eine Korrosion verhindert und/oder die Gleitwirkung beeinflußt.

4. Pralldämpfer nach einem der vorangehenden Ansprüche,
dadurch gekennzeichnet,
daß das innere und äußere Deformationsteil (12, 14) durch Verbindungsmittel, z.B. Schweißpunkte, Nieten, Stifte oder Kleber, zusätzlich miteinander verbunden sind.

5. Pralldämpfer nach einem der vorangehenden Ansprüche,
dadurch gekennzeichnet,
daß die Deformationsteile einen Konus aufweisen, dessen Winkel kleiner gleich 30° ist.

6. Pralldämpfer nach einem der vorangehenden Ansprüche,
dadurch gekennzeichnet,
daß der Hohlraum im inneren Deformationsglied (14) mit einem energieaufnehmenden kompressiblen Medium gefüllt ist.

7. Verfahren zur Herstellung eines Pralldämpfers nach einem der vorangehenden Ansprüche,
dadurch gekennzeichnet,
daß ein fluides Medium unter hohem Druck in ein im wesentlichen rohrförmiges mehrwandiges Ausgangsmaterial eingebracht wird und das Ausgangsmaterial durch Druck gegen eine Außenform umgeformt wird.

## Claims

1. Impact absorber, more especially for motor vehicles, which is secured, at one end, to a bumper bar and, at the other end, to a longitudinal member or to another body part of a vehicle frame,
- said absorber having a non-regeneratable deformation member for absorbing energy with in the event of forces acting with a component of force in the direction of the longitudinal axis of the longitudinal member,
- the deformation member comprising at least two interengaging hollow deformation parts,
- one of which is an outer deformation part and another one of which is an inner deformation part, and
- one of which respectively is secured to the bumper, and one is secured to the longitudinal member of the motor vehicle,
- the deformation parts being pushed together relatively against each other by material deformation when the impact absorber is crushed with a component of force in ist longitudinal axis,
characterised in that
- at least one intermediate layer (13) is provided between the outer deformation part (12) and the inner deformation part (14), which layer influences the friction between the outer deformation part and the inner deformation part,
- the intermediate layer (13) preferably being resilient and preferably being formed from a rubber-plastic material, such as a polymer, silicon rubber or rubber,
- or the intermediate layer (13) preferably being non-resilient and being formed from a soft metal or plastics material.

2. Impact absorber more especially for motor vehicles, which is secured, at one end, to a bumper bar and, at the other end, to a longitudinal member or to another body part of a vehicle frame,
- said absorber having a non-regeneratable deformation member for absorbing energy in the event of forces acting with a component of force in the direction of the longitudinal axis of the longitudinal member,
- the deformation member comprising at least two interengaging hollow deformation parts,
- one of which is an outer deformation part and another one of which is an inner deformation part, and
- one of which respectively is secured to the bumper, and one is secured to the longitudinal member of the motor vehicle,
- the deformation parts being pushed together relatively against each other by material deformation when the impact absorber is crushed with a component of force in ist longitudinal axis,
characterised in that the hollow deformation parts (12, 14) have integral longitudinal reinforcing ribs (20).

3. Impact absorber according to one of the preceding claims, characterised in that the outer deformation part (12) and/or the inner deformation part (14) have/has a coating, preferably a galvanically applied coating, which prevents corrosion and/or influences the sliding effect.

4. Impact darnper according to one of the preceding claims, characterised in that the inner and outer deformation parts (12, 14) are additionally interconnected by connecting means, e.g. spot welds, rivets, pins or adhesives.

5. Impact absorber according to one of the preceding claims, characterised in that the deformation parts have a cone, the angle of which is less than 30ø.

6. Impact absorber according to one of the preceding claims, characterised in that the cavity in the inner deformation member (14) is filled with an energy-absorbing compressible medium.

7. Method of producing an impact absorber according to one of the preceding claims, characterised in that a fluid medium i5 introduced under high pressure into a substantially tubular, multi-walled starting material, and the starting material is shaped by pressure against an outer form.

## Revendications

1. Amortisseur de chocs, en particulier pour véhicule automobile, qui est fixé, d'un côté, à un pare-chocs et, de l'autre, à un longeron longitudinal ou à une autre pièce de carrosserie du châssis du véhicule, ledit amortisseur comportant :
• un élément de déformation non régénérable pour l'absorption d'énergie lors de l'action d'une force ayant une composante dans la direction longitudinale dudit longeron,
• ledit élément de déformation comprenant au moins deux pièces de déformation creuses emboîtées l'une dans l'autre,
• l'une desdites pièces de déformation étant extérieure et l'autre étant intérieure, et
• l'une desdites pièces de déformation étant reliée au pare-chocs et l'autre au longeron du véhicule,
• de sorte que, lors de la compression dudit amortisseur par une composante de force dans l'axe longitudinal de celui-ci, lesdites pièces de déformation sont rapprochées l'une par rapport à l'autre avec déformation de matière,
caractérisé
- en ce que, entre la pièce de déformation extérieure (12) et la pièce de déformation intérieure (14), est prévue au moins une couche intermédiaire (13) ayant un effet sur le frottement entre lesdites pièces de déformation extérieure et intérieure,
- en ce que ladite couche intermédiaire (13) est de préférence élastique et, de préférence, est constituée d'un polymère, d'un caoutchouc de silicone ou d'un caoutchouc, ou
- en ce que ladite couche intermédiaire (13) est de préférence inélastique et est constituée d'un métal mou ou de matière synthétique.

2. Amortisseur de chocs, en particulier pour véhicule automobile, qui est fixé, d'un côté, à un pare-chocs et, de l'autre, à un longeron longitudinal ou à une autre pièce de carrosserie du châssis du véhicule, ledit amortisseur comportant :
• un élément de déformation non régénérable pour l'absorption d'énergie lors de l'action d'une force ayant une composante dans la direction longitudinale dudit longeron,
• ledit élément de déformation comprenant au moins deux pièces de déformation creuses emboîtées l'une dans l'autre,
• l'une desdites pièces de déformation étant extérieure et l'autre étant intérieure, et
• l'une desdites pièces de déformation étant reliée au pare-chocs et l'autre au longeron du véhicule,
• de sorte que, lors de la compression dudit amortisseur par une composante de force dans l'axe longitudinal de celui-ci, lesdites pièces de déformation sont rapprochées l'une par rapport à l'autre avec déformation de matière,
caractérisé en ce que lesdites pièces de déformation creuses (12, 14) comportent des nervures longitudinales de renfort (20), formées dans lesdites pièces.

3. Amortisseur selon l'une des revendications précédentes,
caractérisé en ce que ladite pièce de déformation extérieure (12) et/ou ladite pièce de déformation intérieure (14) comporte un revêtement, de préférence galvanique, qui empêche la corrosion et/ou influence le glissement.

4. Amortisseur selon l'une des revendications précédentes,
caractérisé en ce que les pièces de déformation intérieure et extérieure (12, 14) sont de plus liées l'une à l'autre par des moyens de liaison, par exemple des points de soudure, des rivets, des goupilles ou de la colle.

5. Amortisseur selon l'une des revendications précédentes,
caractérisé en ce que lesdites pièces de déformation présentent une partie conique dont l'angle est au plus égal à 30°.

6. Amortisseur selon l'une des revendications précédentes,
caractérisé en ce que le volume intérieur de la pièce de déformation intérieure (14) est rempli d'un moyen compressible, absorbeur d'énergie.

7. Procédé pour la fabrication d'un amortisseur selon l'une des revendications précédentes,
caractérisé en ce qu'un fluide sous pression élevée est introduit à l'intérieur d'un produit de départ à plusieurs parois au moins sensiblement tubulaire et en ce que ledit produit de départ est pressé par la pression contre une forme extérieure.
